(19) Europäisches Patentamt
European Patent Office
Office européen des brevets

(11) **EP 1 587 319 B1**

(12) **EUROPÄISCHE PATENTSCHRIFT**

(45) Veröffentlichungstag und Bekanntmachung des Hinweises auf die Patenterteilung:
**09.05.2007 Patentblatt 2007/19**

(51) Int Cl.:
*H04N 7/01* *(2006.01)*    *H04N 5/44* *(2006.01)*

(21) Anmeldenummer: **05004875.0**

(22) Anmeldetag: **05.03.2005**

(54) **Verfahren und Vorrichtung zur Interpolation eines Bildpunktes einer Zwischenzeile eines Halbbildes**

Method and apparatus for interpolating a pixel of an intermediate line of a half-picture

Procédé et dispositif pour l'interpolation d'un pixel d'une interligne d'un champ

(84) Benannte Vertragsstaaten:
**DE FR GB IT NL**

(30) Priorität: **02.04.2004 DE 102004016350**

(43) Veröffentlichungstag der Anmeldung:
**19.10.2005 Patentblatt 2005/42**

(73) Patentinhaber: **Micronas GmbH**
**79108 Freiburg i. Br. (DE)**

(72) Erfinder: **Hahn, Maro**
**85579 Neubiberg (DE)**

(74) Vertreter: **Bickel, Michael et al**
**Westphal - Mussgnug & Partner**
**Patentanwälte**
**Mozartstrasse 8**
**80336 München (DE)**

(56) Entgegenhaltungen:
**EP-A- 0 387 048          EP-A- 1 383 322**

**Beschreibung**

Die vorliegende Erfindung betrifft ein Verfahren zur Interpolation eines Bildpunktes einer Zwischenzeile eines ersten Halbbildes einer Folge von zeilenverkämmtem Halbbildern.

Fernsehsignale enthalten üblicherweise Informationen für zeitlich aufeinanderfolgende Halbbilder, die am Bildschirm dargestellt werden können, wobei jeweils zwei aufeinanderfolgende Halbbilder zeilenverkämmt (interlaced) sind, das heißt unterschiedliche Rasterlagen aufweisen. Jedes Halbbild enthält Bildinformationen nur in jeder zweiten Bildzeile, wobei eine Bildzeile, zu der in dem einen Halbbild Bildinformationen vorliegen, im jeweils anderen Halbbild leer ist. Unter Bildinformationswerten sind nachfolgend insbesondere Helligkeitswerte (Luminanzwerte) oder Farbwerte (Chrominanzwerte) zu verstehen.

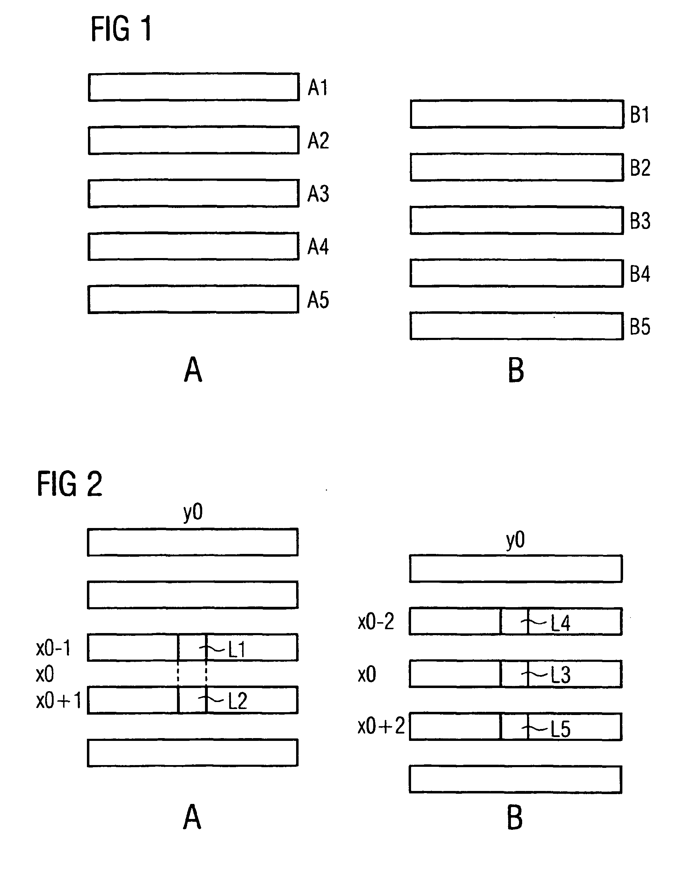

Figur 1 zeigt schematisch zwei derartige aufeinanderfolgende Halbbilder A und B, wobei das erste Halbbild A Bildzeilen A1, A2, A3 und A4 aufweist, zu welchem ein empfangenes Bildsignal Bildinformationen enthält, während das Halbbild B Bildzeilen B1, B2, B3, B4 aufweist, zu denen ein empfangenes Bildsignal Bildinformationen enthält. Die Rasterlagen der Halbbilder A und B sind dabei so gegeneinander versetzt sind, dass die Positionen der Bildzeilen des Halbbildes B gerade den Positionen der leeren Zwischenzeilen des Halbbildes A entsprechen, und umgekehrt.

Zur Steigerung der Bildqualität ist es vielfach erwünscht, für die Bilddarstellung aus den Vollbilder zu generieren, das heißt Bilder, bei denen keine leeren Zwischenzeilen vorhanden sind.

Bei besonders einfachen Verfahren ist hierzu vorgesehen, die Bildzeilen der jeweiligen Halbbilder zu verdoppeln, für eine Zwischenzeile eines Halbbildes also einfach den Inhalt einer oberhalb oder unterhalb liegenden Bildzeile auszugeben. Kontinuierliche Helligkeits- oder Farbübergänge in dem resultierenden Bild erscheinen bei diesem Verfahren abgestuft. Außerdem erscheinen diagonal durch das Bild verlaufende Kanten abgestuft oder treppenartig.

Weiterhin ist es bekannt, zur Interpolation eines Bildpunktes einer Zwischenzeile eines Halbbildes Bildinformationswerte von Bildpunkten heranzuziehen, die in vertikaler Richtung benachbart zu dem zu interpolierenden Bildpunkt liegen und eine lineare Mittelung dieser Bildinformationswerte durchzuführen. Bei diesem Verfahren werden allerdings horizontal durch das Bild verlaufende Kanten nicht scharf wiedergegeben.

Neben Bildpunkten des Halbbildes, welches den zu interpolierenden Bildpunkt umfasst, können für die Interpolation auch Bildinformationswerte zeitlich vorheriger oder nachfolgender Halbbilder berücksichtigt werden.

In der EP 0192292 B1 wird zur Interpolation eines Bildpunktes einer Zwischenzeile eines Halbbildes vorgeschlagen, aus dem Halbbild, in dem der Bildpunkt zu interpolieren ist, zwei Bildpunkte auszuwählen, nämlich einen Bildpunkt einer Bildzeile oberhalb des zu interpolierenden Bildpunkts und einen Bildpunkt einer Bildzeile unterhalb eines zu interpolierenden Bildpunktes, wobei die horizontalen Lagen der ausgewählten Bildpunkte der horizontalen Lage des zu interpolierenden Bildpunktes entsprechen. Weiterhin wird aus einem zeitlich nachfolgenden Halbbild ein Bildpunkt aus einer Bildzeile ausgewählt, dessen Bildpunktposition der Bildpunktposition des zu interpolierenden Bildpunktes entspricht. Bei diesem bekannten Verfahren wird der Mittelwert der Bildinformationswerte dieser drei Bildpunkte ermittelt, und für den zu interpolierenden Bildpunkt wird die Bildinformation des Bildpunktes ausgewählt, dessen Bildinformationswert am nächsten zu dem ermittelten Mittelwert liegt. Der Bildpunkt des zweiten Halbbildes wird also dann für die Interpolation herangezogen, wenn der Bildinformationswert dieses Bildpunktes zwischen den Bildinformationswerten der Bildpunkte des Halbbildes mit dem zu interpolierenden Zwischenpunkt liegt. Andernfalls wird die Bildinformation eines der Bildpunkte aus der benachbarten Zeile des zu interpolierenden Bildpunktes ausgewählt, wodurch einer dieser Werte verdoppelt, das heißt zweimal untereinander dargestellt wird. Diese bloße Wiederholung eines Bildpunktes führt allerdings bei starken vertikalen Übergängen zu einer nicht positionsrichtigen Darstellung, was sich insbesondere an diagonal im Bild verlaufenden Kanten zeigt.

Aus Kovacevic J; Safranek, R.J.; Yeh, E.M.: Deinterlacing by successive approximation. In: IEEE Transactions on Image Processing, February 1997, S. 339-344, ist ein Verfahren zur Interpolation eines Bildpunktes einer Zwischenzeile bekannt, bei dem aus Bildpunkten, die in vertikaler Richtung unterhalb oder oberhalb des zu interpolierenden Bildpunktes liegen, sowie aus einem weiteren Bildpunkt, der aus einem vorhergehenden oder nachfolgenden Halbbild ausgewählt ist, unter Berücksichtigung von Gewichtungsfaktoren der Wert des zu interpolierenden Bildpunktes ermittelt wird.

Die US 5,661,525 beschreibt ebenfalls ein Verfahren zur Interpolation eines Bildpunktes, bei dem direkt vertikal zu dem zu interpolierenden Bildpunkt benachbarte Bildpunkte sowie Bildpunkte aus vorhergehenden oder nachfolgenden Halbbildern ausgewählt werden, wobei diese ausgewählten Bildpunkte zur Erzeugung des zu interpolierenden Bildpunktes gewichtet werden.

Die EP 0 227 190 beschreibt ein Verfahren zur Interpolation eines Bildpunktes in einem Halbbild, wobei oberhalb und unterhalb des zu interpolierenden Bildpunktes liegende Bildpunkte ausgewählt werden, die miteinander verglichen werden.

Wenn die Differenz zwischen diesen zwei Werten größer als ein vorgegebener Wert ist, wird der größere oder der kleinere Bildpunktwert als interpolierter Bildpunktwert ausgewählt. Ist diese Differenz kleiner als der Referenzwert, so werden als interpolierter Wert einer der beiden benachbarten Bildpunktwerte oder der Mittelwert dieser Bildpunktwerte ausgewählt.

Die US 5,910,820 beschreibt ein Verfahren zur Interpolation eines Bildpunktes, bei dem eine Gewichtung ausgewählter Bildpunkte in Abhängigkeit von einem Schwellenwert und in Abhängigkeit von der Differenz zwischen den Bildpunktwerten der zu dem zu interpolierenden Bildpunkt benachbarten Bildpunkte erfolgt.

Die EP 1 383 322 offenbart ein Verfahren zur Interpolation eines Bildpunktes einer Zwischenzeile eines ersten Halbbildes einer Folge von zeit verkämmten Halbbildern. Dieses Verfahren steht vor, dass ein erster Bildpunkt einer unterhalb der Zwischenzeile liegenden Bildzeile im ersten Halbbild und im zweiter Bildpunkt einer unterhalb der Zwischenzeile liegenden Bildzeile im ersten Halbbild sowie ein dritter Bildpunkt aus einer Bildzeile von einem zweiten, folgenden Halbbild ausgewählt werden, deren vertikale Position der Position auf der Zwischenzeile des zu Interpolierenden Bildpunktes entspricht. Die Bildinformationswerte der dreien ausgewählten Bildpunkte werden jeweils mit einem Gewichtungsfaktor multipliziert und die Ergebnisse werden addiert.

Die EP 0 946 054 A1 beschreibt ein Verfahren zur Interpolation eines Bildpunktes unter Verwendung eines gewichteten 3-poligen Medianfilters, wobei dem Medianfilter die zu dem zu interpolierenden Bildpunkt in vertikaler Richtung benachbarten Bildpunkte und die Bildpunkte eines zeitlich vorhergehenden oder zeitlich nachfolgenden Halbbildes zugeführt sind

Die DE 689 27 957 T2 beschreibt ein Verfahren zur Abtastumsetzung eines Fernsehsignals, wobei zwei Datenwerte eines ersten Halbbildes und ein Datenwert eines zweiten Halbbildes ausgewählt werden. Aus den Datenwerten des ersten Halbbildes wird ein Durchschnittswert gebildet und aus allen drei Datenwerten wird ein gewichteter Durchschnittswert gebildet, wobei als interpolierter Wert einer der drei ausgewählten Datenwerte, der Durchschnittswert der Datenwerte des ersten Halbbildes oder der gewichtete Durchschnittswert aller Datenwerte ausgegeben wird.

Die US 5,475,438 beschreibt ein Verfahren zur Bildpunktinterpolation, bei dem der Durchschnitt der Bildpunktwerte von zwei Bildpunkten gebildet wird, die in vertikaler Richtung benachbart zu dem zu interpolierenden Bildpunkt liegen und bei dem ein Bildpunkt aus einem dem Halbbild mit dem zu interpolierenden Bildpunkt vorausgehenden Halbbild und aus einem dem Halbbild mit dem zu interpolierenden Bildpunkt nachfolgenden Halbbild ausgewählt wird. Bei diesem Verfahren werden der Durchschnittswert und die Bildpunktwerte aus dem vorausgehenden bzw. nachfolgenden Halbbild einem Medianfilter zugeführt, dessen Ausgangswert gewichtet und zu dem ebenfalls gewichteten Durchschnittswert addiert wird.

Ziel der vorliegenden Erfindung ist es ein Verfahren und eine Vorrichtung zur Interpolation eines Bildpunktes einer Zwischenzeile eines Halbbildes einer Folge von zeilenverkämmten Halbbildern zur Verfügung zu stellen, das insbesondere eine korrekte Darstellung von horizontal durch das Bild verlaufenden Kanten, eine Unterdrückung von Stufenbildung an diagonal verlaufenden Kanten und eine richtige Wiedergabe von Bewegungsvorgängen gewährleistet.

Diese Aufgabe wird durch ein Verfahren gemäß der Merkmale des Anspruchs 1 sowie durch eine Vorrichtung gemäß der Merkmale des Anspruchs 10 gelöst. Vorteilhafte Ausgestaltungen der Erfindung sind Gegenstand der Unteransprüche.

Bei dem erfindungsgemäßen Verfahren zur Interpolation eines Bildpunktes einer Zwischenzeile eines ersten Halbbildes, das einer Folge von zeilenverkämmten Halbbildern entstammt, ist vorgesehen, wenigstens einen ersten Bildpunkt aus einer benachbart zu der Zwischenzeile liegenden ersten Bildzeile und wenigstens einen zweiten Bildpunkt aus einer benachbart zu der Zwischenzeile liegenden zweiten Bildzeile auszuwählen, wobei dem ersten Bildpunkt ein erster Bildinformationswert und dem zweiten Bildpunkt ein zweiter Bildinformationswert zugeordnet ist. Außerdem werden bei dem Verfahren ein dritter Bildinformationswert, ein vierter Bildinformationswert und ein fünfter Bildinformationswert zur Verfügung gestellt. Der dritte Bildinformationswert ist dabei abhängig vom Bildinformationswert wenigstens eines dritten Bildpunktes aus einem zweiten Halbbild, dessen Bildposition der Bildposition des zu interpolierenden Bildpunktes entspricht. Der vierte Bildinformationswert ist abhängig vom Bildinformationswert wenigstens eines vierten Bildpunktes, der in vertikaler Richtung benachbart zu dem dritten Bildpunkt im zweiten Halbbild liegt, und der fünfte Bildinformationswert ist abhängig vom Bildinformationswert wenigstens eines fünften Bildpunktes, der in vertikaler Richtung benachbart zu dem dritten Bildpunkt in dem zweiten Halbbild liegt.

Auf den ersten und zweiten Bildinformationswert wird bei dem Verfahren eine erste Filterung angewendet, die eine Tiefpassfilterung umfasst, um einen ersten Filterwert zu erzeugen. Auf den dritten, vierten und fünften Bildinformationswert wird eine zweite Filterung angewendet, die eine Hochpassfilterung umfasst, um einen zweiten Filterwert zu erzeugen. Außerdem wird die Breite eines durch den ersten und zweiten Bildinformationswert vorgegebenen Werteintervalls ermittelt.

Der Bildinformationswert des interpolierten Bildpunktes wird bei dem erfindungsgemäßen Verfahren aus der Summe des ersten Filterwertes und des zweiten Filterwertes gebildet, wenn der Betrag des zweiten Filterwertes kleiner ist als die Hälfte der ermittelten Intervallbreite. Ist der Betrag des zweiten Filterwertes größer als die Hälfte der ermittelten Intervallbreite, so wird als Bildinformationswert des zu interpolierenden Bildpunktes ein Bildinformationswert ausgegeben, der innerhalb des durch den ersten und zweiten Bildinformationswert vorgegebenen Intervalls liegt und der beliebig gewählt werden kann.

Der Begriff Bildinformationswert umfasst im Zusammenhang mit der vorliegenden Erfindung einen beliebigen Informationswert, der einem Bildpunkt zugeordnet sein kann, insbesondere einen Helligkeitswert (Luminanzwert) oder einen Farbwert (Chrominanzwert).

Die Tiefpassfilterung umfasst bei dem vorliegenden Verfahren beispielsweise eine Mittelwertbildung des ersten und zweiten Bildinformationswertes. Die Hochpassfilterung des dritten, vierten und fünften Bildinformationswertes umfasst beispielsweise eine Mittelwertbildung des vierten und fünften Bildinformationswertes und das Bilden der Differenz zwischen dem dritten Bildinformationswert und diesem Mittelwert, sowie gegebenenfalls eine geeignete Normierung des hierdurch erhaltenen Signalswertes. Die zweite Filterung kann insbesondere eine Verstärkung oder Abschwächung eines durch die Hochpassfilterung erhaltenen Filterwertes umfassen, um den zweiten Filterwert aus dem durch die Hochpassfilterung erhaltenen Wert zu erzeugen. Außerdem besteht die Möglichkeit, der Hochpassfilterung des dritten, vierten und fünften Bildinformationswertes eine Filterung mit nichtlinearer Kennlinie, insbesondere eine Coring-Filterung, nachzuschalten, um Auswirkungen von Rauschen auf die Bildpunktinterpolation zu unterdrücken. Bei einem Coring-Filter werden in bekannter Weise Eingangswerte, deren Betrag kleiner als ein vorgegebener Grenzwert ist, zu Null gesetzt, während Eingangssignalwerte, deren Betrag größer als der Grenzwert ist, betragsmäßig um diesen Grenzwert reduziert werden.

Bei einer Ausführungsform des Verfahrens ist vorgesehen, dass der dritte Bildinformationswert dem Bildinformationswert des dritten Bildpunktes entspricht, dass der vierte Bildinformationswert dem Bildinformationswert des vierten Bildpunktes entspricht und dass der fünfte Bildinformationswert dem Bildinformationswert des fünften Bildpunktes entspricht.

Bei einer weiteren Ausführungsform ist vorgesehen, die dritten, vierten und fünften Bildinformationswerte jeweils durch eine lineare Mittelung der Bildinformationswerte von mehreren Bildpunkten, die zeitlich aufeinanderfolgenden Halbbildern an jeweils derselben Position entstammen, zu erzeugen.

Für die Erzeugung des Bildinformationswertes des zu interpolierenden Bildpunktes für den Fall, dass der Betrag des zweiten Filterwertes größer ist als die halbe Intervallbreite des durch den ersten und zweiten Bildinformationswert aufgespannten Intervalls, sind verschiedenste Vorgehensweisen möglich.

Bei einer Ausführungsform ist vorgesehen, als Bildinformationswert des zu interpolierenden Bildpunktes den Mittelwert des ersten und zweiten Bildinformationswertes oder einen durch eine gewichtete Mittelung des ersten und zweiten Bildinformationswertes erhaltenen Wert auszugeben. Bei einer anderen Ausführungsform ist für diesen Fall vorgesehen, den ersten oder zweiten Bildinformationswert als Bildinformationswert des zu interpolierenden Bildpunktes auszugeben.

Die Vorrichtung zur Durchführung der Bildpunktinterpolation umfasst eine erste Filtereinrichtung, die ein Tiefpassfilter aufweist, der der erste und zweite Bildinformationswert zugeführt sind und die einen Filtersignalwert bereitstellt, und eine zweite Filtereinrichtung, die ein Hochpassfilter umfasst, der der dritte, vierte und fünfte Bildinformationswert zugeführt sind und die einen zweiten Filtersignalwert bereitstellt. Außerdem ist eine Intervallermittlungseinheit vorhanden, der der erste und zweite Bildinformationswert zugeführt sind und die einen von der halben Breite eines durch den ersten und zweiten Bildinformationswert aufgespannten Intervalls abhängigen Intervallwert bereitstellt. Zur Erzeugung des interpolierten Bildinformationswertes dient eine Signalverarbeitungseinheit, der der erste Filtersignalwert, der zweite Filtersignalwert und der Intervallwert zugeführt sind und die abhängig von einem Vergleich des Intervallwertes mit dem zweiten Filtersignalwert den interpolierten Bildinformationswert zur Verfügung stellt.

Die Signalverarbeitungseinheit ist dabei insbesondere dazu ausgebildet, die Summe aus erstem und zweitem Filterwert als Bildinformationswert auszugeben, wenn der Betrag des zweiten Filtersignalwertes kleiner als der Intervallwert ist.

Die vorliegende Erfindung wird nachfolgend in Ausführungsbeispielen anhand von Figuren näher erläutert.

Figur 1     zeigt schematisch zwei zeitlich aufeinanderfolgende zeilenverkämmte Halbbilder.

Figur 2     zeigt schematisch zwei zeitlich aufeinanderfolgende zeilenverkämmte Halbbilder zur Veranschaulichung der für die Interpolation eines Bildpunktes einer Zwischenzeile ausgewählten Bildpunkte aus den beiden Halbbildern.

Figur 3     zeigt ein Blockschaltbild einer erfindungsgemäßen Vorrichtung zur Interpolation eines Bildinformationswertes eines Bildpunktes anhand von fünf Bildinformationswerten, die eine erste Filtereinheit, eine zweite Filtereinheit, eine Intervallermittlungseinheit und eine Signalverarbeitungseinheit umfasst.

Figur 4     zeigt ein erstes Ausführungsbeispiel der ersten Filtereinheit.

Figur 5     zeigt ein zweites Ausführungsbeispiel der ersten Filtereinheit.

Figur 6     zeigt ein Ausführungsbeispiel der Intervallermittlungseinheit.

Figur 7     zeigt ein weiteres Ausführungsbeispiel einer erfindungsgemäßen Vorrichtung zur Bildpunktinterpolation.

Figur 8     zeigt die Vorrichtung gemäß Figur 7 in detaillierterer Darstellung einzelner Einheiten.

In den Figuren bezeichnen, sofern nicht anders angegeben, gleiche Bezugszeichen gleiche Teile und Signale mit gleicher Bedeutung.

Zur Veranschaulichung des erfindungsgemäßen Verfahrens zeigt Figur 2 schematisch zwei zeitlich aufeinanderfolgende zeilenverkämmte Halbbilder A, B. Zu dem Halbbild A liegen beispielsweise Bildinformationswerte für die ungeradzahligen Zeilen vor, während für das Halbbild B entsprechend Bildinformationswerte für die geradzahligen Zeilen vorliegen.

Mit x0 ist in Figur 2 in dem Halbbild A die Zeilenposition einer Zwischenzeile bezeichnet, die zwischen benachbarten Bildzeilen liegt, die mit x0-1, x0+1 bezeichnet sind. Wegen der versetzten Rasterlage der aufeinanderfolgenden Halbbilder A, B enthält das Halbbild B an der Zeilenposition x0, an der das Halbbild A eine Zwischenzeile aufweist, eine Bildzeile. Mit x0-2 ist in Figur 2 die Zeilenposition einer oberhalb der Bildzeile x0 liegenden Bildzeile und mit x0+2 die Zeilenposition einer unterhalb der Bildzeile x0 liegenden Bildzeile in dem Halbbild B bezeichnet.

Betrachtet sei nun ein Bildpunkt A(x0,y0), in der Zwischenzeile x0 des Halbbildes A an der horizontalen Position y0, dessen Bildinformationswert Lx zu interpolieren ist, wobei mit Bildinformationswert nachfolgend ein beliebiger einem Bildpunkt zugeordneter Informationswert, insbesondere ein Helligkeitswert oder ein Farbwert, bezeichnet ist.

Bei der Interpolation des Bildinformationswertes Lx werden wenigstens fünf Bildinformationswerte L1-L5 berücksichtigt, die in der nachfolgend erläuterten Weise gewonnen werden. Der erste Bildinformationswert L1 ist einem ersten Bildpunkt A(x0-1,y0) zugeordnet, der einer ersten Bildzeile x0-1 des ersten Halbbildes A entstammt, die benachbart zu der zu der Zwischenzeile x0 mit dem zu interpolierenden Bildpunkt liegt. Die horizontale Position des ersten Bildpunktes A(x0-1,y0) entspricht dabei der horizontalen Position des zu interpolierenden Bildpunktes A(x0,y0). Der zweite Bildinformationswert L2 ist einem zweiten Bildpunkt A(x0+1,y0) zugeordnet, der einer zweiten Bildzeile y0+1 des ersten Halbbildes A entstammt, die benachbart zu der zu interpolierenden Zwischenzeile x0 liegt. Die horizontale Position dieses zweiten Bildpunktes A(y0+1,y0) entspricht der horizontalen Position des zu interpolierenden Bildpunktes A(x0,y0). Die erste und zweite Bildzeile x0-1, x0+1 liegen in dem dargestellten Ausführungsbeispiel unmittelbar benachbart oberhalb bzw. unterhalb der zu interpolierenden Zwischenzeile x0.

Der dritte Bildinformationswert L3 ist einem dritten Bildpunkt B(x0,y0) in dem zweiten Halbbild B, dass dem ersten Halbbild A zeitlich vorausgeht oder zeitlich nachfolgt, zugeordnet, wobei die Bildposition dieses dritten Bildpunktes B(x0,y0) der Bildposition des zu interpolierenden Bildpunktes A(x0,y0) entspricht. Der vierte Bildinformationswert L4 ist in dem Beispiel einem vierten Bildpunkt B(y0-2,y0) zugeordnet, der aus einer benachbart zu dem dritten Bildpunkt B(y0,y0) liegenden Bildzeile x0-2 entstammt. Der fünfte Bildinformationswert L5 ist einem fünften Bildpunkt B(y0+2,y0) zugeordnet, der einer benachbart zu dem dritten Bildpunkt B(x0,y0) liegenden Bildzeile x0-2 entstammt. Die horizontalen Positionen der vierten und fünften Bildpunkte B(x0-2,y0), B(x0+2,y0) entsprechen der horizontalen Position des dritten Bildpunktes B(x0,y0) und damit der horizontalen Position des zu interpolierenden Bildpunktes A(x0,y0).

Die weitere Verarbeitung der in der erläuterten Weise erhaltenen Bildinformationswerte L1-L5 wird nachfolgend erläutert.

Diese Verarbeitung umfasst das Erzeugen eines ersten Filterwertes durch Anwenden einer ersten Filterung auf den wenigstens einen ersten und zweiten Bildinformationswert L1, L2, wobei diese Filterung eine Tiefpassfilterung umfasst. Die Erzeugung dieses ersten Filterwertes aus dem ersten und zweiten Bildinformationswert L1, L2 erfolgt beispielsweise gemäß folgender Vorschrift:

$$\mathtt{LF1 \ = \ k1 \ \cdot \ L1 \ + \ k2 \ \cdot \ L2} \qquad (1)$$

wobei LF1 den ersten Filterwert und k1, k2 Gewichtungsfaktoren bezeichnet. Für diese Gewichtungsfaktoren k1, K2 gilt vorzugsweise k1 = k2 = 0,5, wobei der erste Filterwert LF1 dann dem Mittelwert des ersten und zweiten Bildinformationswertes L1, L2 entspricht.

Außerdem wird ein zweiter Filterwert LF2 durch Anwenden einer zweiten Filterung, die eine Hochpassfilterung umfasst, auf den dritten, vierten, fünften Bildinformationswert erzeugt. Die Erzeugung dieses zweiten Filterwertes LF2 aus dem dritten, vierten und fünften Bildinformationswert erfolgt beispielsweise gemäß folgender Vorschrift:

$$\mathtt{LF2 \ = \ L3 \ - \ 0,5 \ \cdot \ (L4 \ + \ L5)} \qquad (2).$$

Der auf diese Weise erzeuge zweite Filtersignalwert LF2 repräsentiert die Differenz zwischen dem Bildinformationswert L3 des dritten Bildpunktes B(x0,y0), dessen Position der Position des zu interpolierenden Bildpunktes A (x0,y0) entspricht, und dem Mittelwert der Bildinformationswerte L4,L5 der benachbart zu diesem dritten Bildpunkt liegenden Bildpunkte B(x0-2,y0), B(x0+2,y0).

Außerdem wird die Breite eines durch den ersten und zweiten Bildinformationswert L1, L2 aufgespannten Intervalls ermittelt, um einen Intervallbreitewert IN zur Verfügung zu stellen, dessen Wert der halben Breite des durch den ersten und zweiten Bildinformationswert L1, L2 aufgespannten Intervalls entspricht, für den also gilt:

$$ \text{IN} = 0{,}5 \cdot \left| \text{L1} - \text{L2} \right| \qquad\qquad (3) $$

Dieser Intervallwert IN wird mit dem zweiten Filtersignalwert LF2 verglichen, um abhängig von diesem Vergleich den zu interpolierenden Bildinformationswert Lx zur Verfügung zu stellen. Dabei gilt, dass als interpolierter Bildinformationswert Lx die Summe aus dem ersten und zweiten Filterwert LF1, LF2 erzeugt wird, wenn der Betrag des zweiten Filterwertes kleiner ist als die halbe Breite des durch den ersten und zweiten Bildinformationswert L1, L2 aufgespannten Intervalls bzw. kleiner ist als die Hälfte des Intervallwertes IN. Ist der Betrag des zweiten Filterwertes LF2 größer als die halbe Intervallbreite, so wird als interpolierter Bildinformationswert Lx ein beliebiger Wert erzeugt, der innerhalb des durch den ersten und zweiten Bildinformationswert L1, L2 vorgegebenen Intervalls liegt. Es gilt also:

$$ \text{Lx} = \text{LF1} + \text{LF2, wenn } \left| \text{LF2} \right| < 0{,}5 \cdot \text{IN} \qquad\qquad (4a) $$

$$ \text{Lx} = \text{beliebiger Wert aus [L1, L2], wenn } \left| \text{LF2} \right| > 0{,}5 \cdot \text{IN} \quad (4b). $$

[.] in Gleichung 4b bezeichnet dabei ein abgeschlossenes (L1 und L2 enthaltendes) oder ein offenes (L1 und L2 nicht enthaltendes) Intervall.

Sofern der Betrag des zweiten Filterwertes LF2 größer ist als die halbe Intervallbreite, wird als Bildinformationswert Lx des zu interpolierenden Bildpunktes vorzugsweise ein Mittelwert des ersten und zweiten Bildinformationswertes L1, L2, oder einer dieser beiden Bildinformationswerte L1, L2 erzeugt.

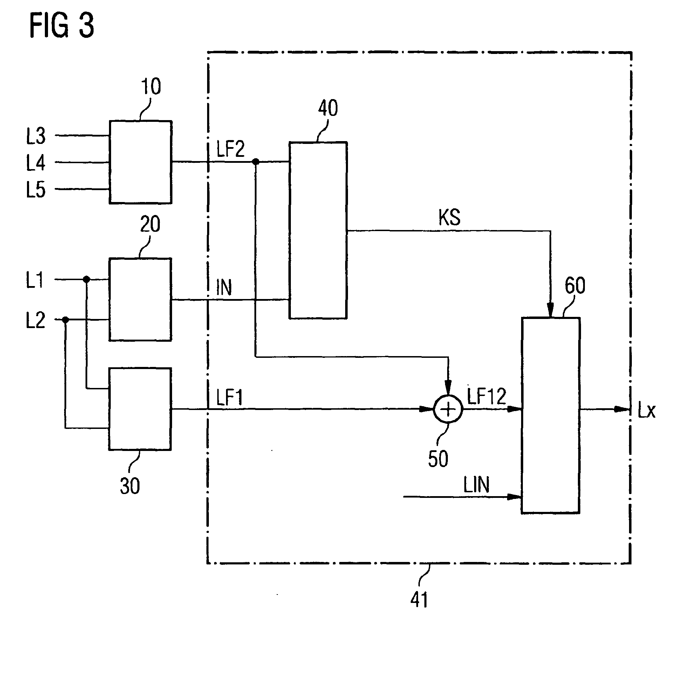

Eine Vorrichtung zur Durchführung eines erfindungsgemäßen Interpolationsverfahrens nach Bereitstellung des ersten bis fünften Bildinformationswertes L1-L5 ist in Figur 3 dargestellt.

Diese Anordnung umfasst eine erste Filtereinheit 30, der der erste und zweite Bildinformationswert L1, L2 zugeführt sind, und die den ersten Filterwert LF1 unter Anwendung einer Tiefpassfilterung aus dem ersten und zweiten Filterwert L1, L2 erzeugt. Die Anordnung umfasst weiterhin eine Intervallermittlungseinheit 20, der der erste und zweite Bildinformationswert L1, L2 zugeführt sind, und die ein von der Breite eines durch den ersten und zweiten Bildinformationswert L1, L2 aufgespannten Intervalls abhängigen Intervallbreitewert IN zur Verfügung stellt. Außerdem umfasst die Vorrichtung eine zweite Filtereinheit 10, der der dritte, vierte und fünfte Bildinformationswert L3, L4, L5 zugeführt ist, und die den zweiten Filterwert LF2 unter Anwendung einer Hochpassfilterung aus diesen Bildinformationswerten L3, L4 L5 zur Verfügung stellt.

Der Intervallbreitewert IN und der zweite Filterwert LF2 sowie der erste Filterwert LF1 sind einer Signalverarbeitungseinheit 41 zugeführt, die den Bildinformationswert Lx des zu interpolierenden Bildpunktes bereitstellt. Diese Signalverarbeitungseinheit 41 umfasst in dem Beispiel eine Vergleichereinheit 40, der der zweite Filterwert LF2 und der Intervallbreitewert IN zugeführt sind, und die abhängig von einem Vergleich des zweiten Filterwertes LF2 mit dem Intervallbreitewert IN ein Vergleichersignal KS erzeugt. Dieses Vergleichersignal KS ist einer Auswahlschaltung 60, beispielsweise einem Multiplexer zugeführt, an dessen einem Eingang die Summe aus dem ersten und zweiten Filterwert LF1, LF2 anliegt, die durch einen Addierer 50 bereitgestellt wird, und an dessen anderem Eingang ein Bildinformationswert LIN anliegt, das aus dem durch den ersten und zweiten Bildinformationswert L1, L2 aufgespannten Intervall ausgewählt ist. Dieser Bildinformationswert LIN kann beispielsweise dem ersten Filterwert LF1 entsprechen oder kann in beliebiger Weise, aus dem ersten und zweiten Bildinformationswert L1, L2 durch lineare Mittlung erzeugt sein.

Abhängig davon, ob der Betrag des zweiten Filterwertes LF2 kleiner ist als die Hälfte der durch den Intervallbreitenwert IN repräsentierten Intervallbreite nimmt das Vergleichssignal KS einen ersten oder zweiten Zustand an, um in einem Fall das Summensignal LF12 aus dem ersten und zweiten Filterwert LF1, LF2 als interpolierten Bildinformationswert Lx und im anderen Fall den Bildinformationswert LIN als interpolierten Bildinformationswert Lx auszugeben.

Der Bildinformationswert LIN ist dabei vorzugsweise so gewählt, dass er die Differenz zwischen dem zweiten Filterwert LF2 und dem Intervallbreitwert berücksichtigt, wenn der zweite Filterwert LF2 größer als der Intervallbreitewert IN ist.

Der Bildinformationswert LIN kann beispielsweise aus dem ersten Filterwert LF1 und dem zweiten Filterwert LF2 gemäß folgender Beziehung ermittelt werden:

$$\mathtt{LIN = LF1 + k \cdot LF2} \qquad (5),$$

wobei für den Gewichtungsfaktor k gilt:

$$\mathtt{k \leq 1} \qquad (6a)$$

$$\mathtt{k \leq IN/|LF2| \ mit \ k=1 \ für \ LF2=0} \qquad (6b).$$

Vorzugsweise wird der Gewichtungsfaktor so gewählt, dass

$$\mathtt{k=IN/|LF2|} \qquad (7)$$

gilt.

Bei Ermittlung des Bildinformationswertes gemäß der Beziehungen 5 und 7 entspricht der LIN stets dem ersten oder zweiten Bildinformationswert. Für k < IN/|LF2| liegt der Wert LIN stets innerhalb des durch den ersten und zweiten Bildinformationswert L1, L2 aufgespannten Intervalls.

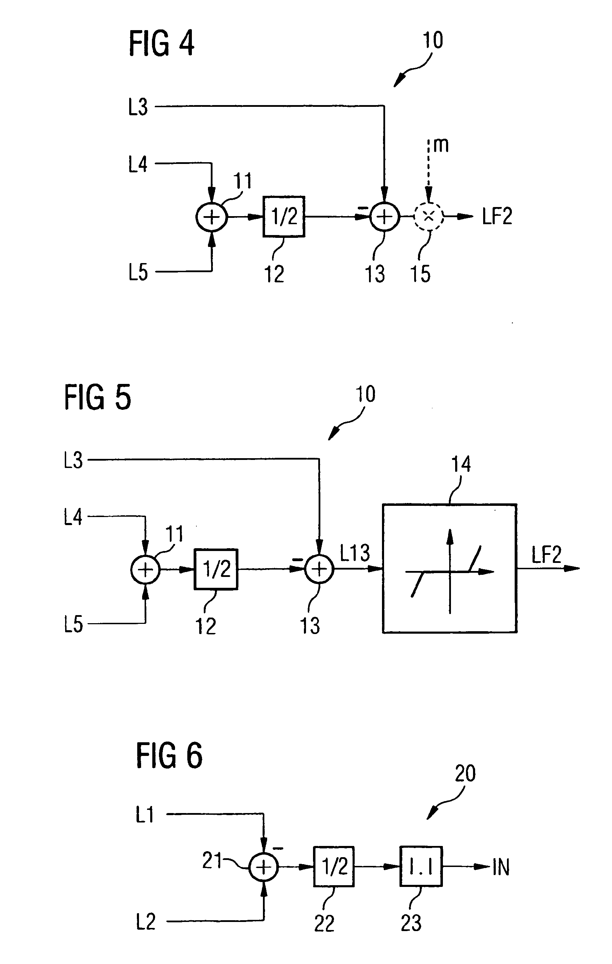

Ein Realisierungsbeispiel der ersten Filtereinheit 10 ist in Figur 4 dargestellt. Diese Filtereinheit umfasst einen Addierer 11, dem der vierte und fünfte Bildinformationswert L4, L5 zugeführt sind und eine Gewichtungseinheit 12, die das Addiererausgangssignal 11 mit einem Faktor 0,5 gewichtet. Die Einheit umfasst weiterhin einen Subtrahierer 13, dem der dritte Bildinformationswert L3 und das am Ausgang der Gewichtungseinheit anliegende gewichtete Addiererausgangssignal zugeführt ist, um den zweiten Filterwert LF2 zur Verfügung zu stellen. Optional besteht die Möglichkeit, das Ausgangssignal des Subtrahierers 13 mittels einer Gewichtungseinheit 15 mit einem Gewichtungsfaktor m, der größer oder kleiner 1 zu gewichten, um das Filterausgangssignal LF2 zu verstärken oder zu dämpfen.

Eine Abwandlung einer solchen zweiten Filtereinheit 10 ist in Figur 5 dargestellt. Neben den anhand von Figur 4 erläuterten Komponenten umfasst diese Filtereinheit weiterhin ein Coring-Filter, dem das Ausgangssignal des Subtrahierers 13 zugeführt ist, und an dessen Ausgang der zweite Filterwert LF2 zur Verfügung steht. Unter der Annahme, dass L13 das Ausgangssignal des Subtrahierers 13 bezeichnet, lässt sich das Übertragungsverhalten dieses Coring-Filters 14 bezogen auf dessen Eingangssignal L13 und dessen Ausgangssignal LF2 wie folgt beschreiben:

$$\mathtt{LF2 = L13 + a \ \ für \ L13 < -a} \qquad (5a)$$

$$\mathtt{LF2 = 0 \qquad \ \ für \ -a < L13 < a} \qquad (5b)$$

$$\mathtt{LF2 = L13 - a \ \ für \ L13 > a} \qquad (5c).$$

Dieses Coring-Filter setzt somit Ausgangssignalwerte L13 des Subtrahierers 13 zu Null, wenn deren Betrag kleiner als die vorgegebene Coring-Konstante a ist, und verringert den Betrag des Subtrahiererausgangssignals L13 um den Wert der Coring-Konstante a, wenn der Betrag des Subtrahiererausgangssignalwertes L13 größer als die Coring-Konstante a ist. Aus einem Rauschen resultierende Hochpasssignalanteile werden durch dieses Coring-Filter 14 wirksam unterdrückt.

Neben einem Coring-Filter mit der oben angegebenen Kennlinie, sind selbstverständlich Filter mit beliebigen Kennlinien einsetzbar, die betragsmäßig kleine Eingangswerte unterdrücken oder zumindest dämpfen und die betragsmäßig größere Eingangswerte unverändert lassen oder gar verstärken.

Figur 6 zeigt ein Realisierungsbeispiel der Intervallermittlungseinheit 20. Die Intervallermittlungseinheit erfasst einen Subtrahierer 21, den der erste und zweite Bildinformationswert L1, L2 zugeführt sind, und dem eine Gewichtungseinheit 22 nachgeschaltet ist, die das Subtrahiererausgangssignal mit einem Gewichtungsfaktor 0,5 gewichtet. Dieser Gewichtungseinheit 22 ist zur Bildung des Intervallbreitewertes eine Betragsbildungseinheit 23 nachgeschaltet.

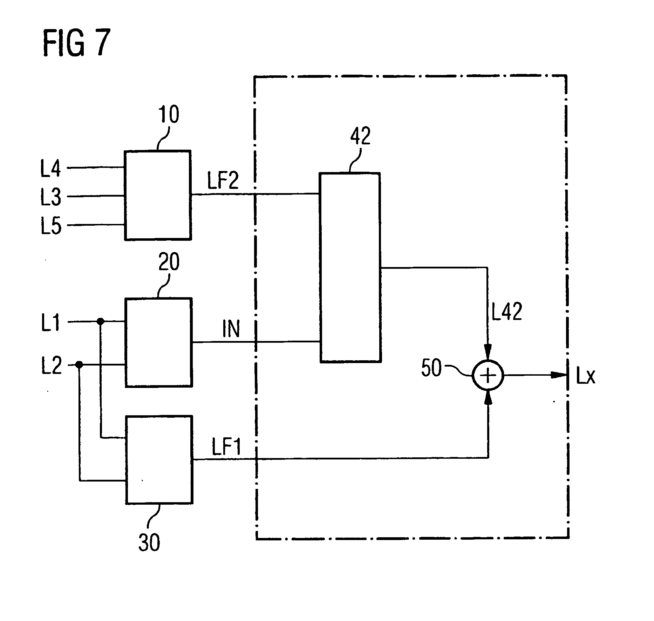

Figur 7 zeigt ein weiteres Ausführungsbeispiel einer erfindungsgemäßen Vorrichtung mit einer gegenüber dem Beispiel nach Figur 3 abgewandelten Signalverarbeitungseinheit. Bei dieser Signalverarbeitungseinheit 41 steht der interpolierte Bildinformationswert Lx am Ausgang eines Addierers 50 zur Verfügung, dem der erste Filterwert LF1 und ein Ausgangswert L42 einer Verarbeitungseinheit 42 zugeführt sind. Der Verarbeitungseinheit 42 sind der zweite Filterwert LF2 und der Intervallbreitewert IN zugeführt.

Aufgabe der Verarbeitungseinheit 42 ist es, abhängig von einem Vergleich des Intervallbreitewertes IN mit dem zweiten Filtersignal LF2 den Signalwert L42 entweder dem zweiten Filtersignalwert LF2 gleichzusetzen oder gleich einem Wert zu setzen, dessen Betrag kleiner oder gleich der Hälfte des Intervallbreitewertes IN ist.

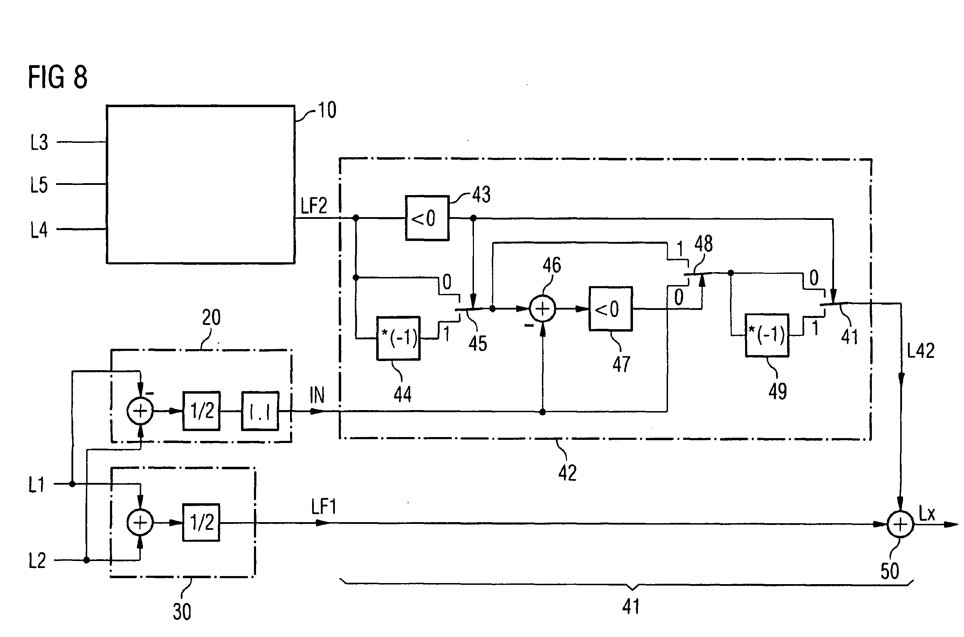

Figur 8 zeigt eine Vorrichtung gemäß Figur 7 mit einer im Detail dargestellten Verarbeitungseinheit 42, sowie einer im Detail dargestellten Intervallermittlungseinheit 20 und einer im Detail dargestellten zweiten Filtereinheit 30.

Die erste Filtereinheit 30 umfasst einen Addierer 31 und ein dem Addierer nachgeschaltetes Gewichtungsglied 32, welches das Addiererausgangssignal mit einem Gewichtungsfaktor 0,5 gewichtet. Der erste Filtersignalwert LF1 entspricht dadurch dem Mittelwert des ersten und zweiten Bildinformationswertes L1, L2. Für den Intervallbreitewert IN gilt in dem Ausführungsbeispiel gemäß Figur 8:

$$IN = 0,5 \cdot |L2 - L1| \qquad\qquad (6),$$

der Intervallbreitewert IN entspricht also der Hälfte des mathematischen Abstandes zwischen dem ersten und zweiten Bildinformationswert L1, L2.

Die grundsätzliche Funktion der Verarbeitungseinheit 42 besteht darin, ein Ausgangssignal L42 zur Verfügung zu stellen, dessen Betrag nach oben hin auf den Wert des Intervallbreitewertes IN begrenzt ist und dessen Vorzeichen dem Vorzeichen des zweiten Filterwertes LF2 entspricht. Als Ausgangssignal L42 wird ein Signal ausgegeben, dessen Betrag dem Betrag des zweiten Filterwertes LF2, wenn der Betrag des zweiten Filterwertes LF2 kleiner als der Intervallbreitewert IN ist. Ist der Betrag zweiten Filterwertes LF2 größer als der Intervallbreitewert IN, so wird ein Ausgangssignal L42 ausgegeben, dessen Betrag dem Intervallbreitwert entspricht. Das Ausgangssignal umfasst somit maximal einen Wertebereich von [-IN ... IN].

Zur Gewährleistung einer solchen Funktion umfasst die Verarbeitungseinheit 42 einen ersten Vergleicher 43, der ermittelt, ob der zweite Filtersignalwert LF2 positives oder negatives Vorzeichen besitzt und der abhängig von diesem Vergleich einen ersten und zweiten Schalter 41, 45 ansteuert. Dieser zweite Schalter 45 führt dann, wenn der zweite Filtersignalwert LF2 positiv ist, den zweiten Filtersignalwert LF2 einem Subtrahierer 46 zu, und dann, wenn der zweite Filtersignalwert LF2 negativ ist, einen durch eine Gewichtungseinheit 44 mit einem Multiplikationsfaktor -1 multiplizierten zweiten Filtersignalwert LF2 dem Subtrahierer 46 zu. Der erste Vergleicher 43, die Gewichtungseinheit 44 und der zweite Schalter 45 erfüllen die Funktion einer Betragsbildungseinheit, die dem Subtrahierer stets einen positiven Wert zuführt, der dem Betrag des zweiten Filterwertes LF2 entspricht.

Der Subtrahierer 46 subtrahiert den stets positiven Intervallbreitewert IN von dem Betrag des zweiten Filtersignalwertes LF2. Das Ausgangssignal dieses Subtrahierers 46 ist einem weiteren Vergleicher 47 zugeführt, der das Subtrahiererausgangssignal mit Null vergleicht und der dadurch ermittelt, ob der Betrag des zweiten Filtersignalwertes LF2 größer oder kleiner als der Intervallbreitewert IN ist. Dieser Vergleicher 47 steuert einen weiteren Umschalter 48 an, dem der Betrag des zweiten Filtersignalwertes LF2 und der Intervallbreitwert zugeführt ist, und der angesteuert durch den Vergleicher 47 den Betrag des zweiten Filtersignalwertes LF2 weiterleitet, wenn das Subtrahiererausgangssignal kleiner als Null ist, oder den Intervallbreitewert IN weiterleitet, wenn das Subtrahiererausgangssignal größer als Null ist.

Durch eine weitere Gewichtungseinheit 49 und den dem zweiten Ausgang vorgeschalteten zweiten Schalter 41 wird dabei sichergestellt, dass das von dem Schalter 48 weitergeleitete Signal Ausgangssignal mit einem Multiplikationsfaktor -1 multipliziert wird, wenn der zweite Filtersignalwert LF2 < 0 ist. Es wird also ein Wert L42 ausgegeben, dessen Betrag dem Betrag von LF2 entspricht, wenn der Betrag von LF2 kleiner als der Intervallwert IN ist, und dessen Betrag sonst dem Intervallwert IN entspricht. Das Vorzeichen des Ausgangswertes L42 wird dabei entsprechend dem Vorzeichen des zweiten Filterwertes LF2 gewählt.

Bezugszeichenliste

| | |
|---|---|
| In | Intervallbreitewert |
| L42 | Ausgangssignal der Verarbeitungseinheit |
| LF1 | erster Filtersignalwert |
| LF12 | Summensignal |
| LF2 | zweiter Filtersignalwert |
| Lx | interpolierter Bildinformationswert |
| 10 | zweite Filtereinheit |
| 11 | Addierer |
| 20 | Intervallermittlungseinheit |
| 23 | Betragsbildungseinheit |
| 30 | erste Filtereinheit |
| 12, 22 | Gewichtungseinheiten |
| 13, 21 | Subtrahierer |
| 41 | Signalverarbeitungseinheit |
| 42 | Verarbeitungseinheit |
| 47 | Vergleichseinheit |
| 50 | Addierer |
| 60 | Auswahleinheit |

**Patentansprüche**

1. Verfahren zur Interpolation eines Bildpunktes (A(x0,y0)) einer Zwischenzeile eines ersten Halbbildes (A) in einer Folge von zeilenverkämmten Halbbildern (A, B), das folgende Verfahrensschritte umfasst:

    - Auswählen wenigstens eines ersten Bildpunktes (A(x0-1,y0)) dem ein erster Bildinformationswert (L1) zugeordnet ist, aus einer benachbart zu der Zwischenzeile liegenden ersten Bildzeile und wenigstens eines zweiten Bildpunktes (A(x0+1,y0)) dem ein zweiter Bildinformationswert (L2) zugeordnet ist aus einer benachbart zu der Zwischenzeile liegenden zweiten Bildzeile,
    - Bereitstellen eines dritten Bildinformationswertes (L3), der abhängig ist vom Bildinformationswert wenigstens eines dritten Bildpunktes (B(x0,y0)) aus einem dem ersten Halbbild zeitlich vorausgehenden oder nachfolgenden zweiten Halbbild (B), dessen Bildposition der Bildposition des zu interpolierenden Bildpunktes (A(x0,y0)) entspricht, und Bereitstellen eines vierten Bildinformationswertes (L4), der abhängig ist vom Bildinformationswert wenigstens eines vierten Bildpunktes (B(x0-2,y0)), der in vertikaler Richtung benachbart zu dem dritten Bildpunkt (B(x0,y0)) liegt, sowie eines fünften Bildinformationswertes (L5), der abhängig ist vom Bildinformationswert wenigstens eines fünften Bildpunktes B(x0+2,y0)), der in vertikaler Richtung benachbart zu dem dritten Bildpunkt B(x0,y0)) liegt,
    - Erzeugen eines ersten Filterwertes durch Anwenden einer ersten Filterung, die eine Tiefpassfilterung umfasst, auf den wenigstens eine ersten und zweiten Bildinformationswert (L1,L2)
    - Ermitteln der Breite eines durch den ersten und zweiten Bildinformationswert (L1,L2) vorgegebenen Intervalls,
    - Erzeugen eines zweiten Filterwertes (LF2) durch Anwenden einer zweiten Filterung, die eine Hochpassfilterung umfasst, auf den dritten, vierten und fünften Bildinformationswert (L3,L4,L5)
    - Erzeugen eines Bildinformationswertes (Lx) des interpolierten Bildpunktes (A(x0,y0)) als Summe des ersten Filterwertes (LF1) und des zweiten Filterwertes (LF2), wenn der Betrag des zweiten Filterwertes (LF2) kleiner als die halbe Intervallbreite ist,
    - Erzeugen eines Bildinformationswertes (Lx) des interpolierten Bildpunktes derart, dass dieser Bildinformationswert innerhalb des Intervalls liegt, wenn der zweite Filterwert größer als die halbe Intervallbreite ist.

2. Verfahren nach Anspruch 1, bei dem die Tiefpassfilterung eine Mittelwertbildung des ersten und zweiten Bildinformationswertes (L1,L2) umfasst.

3. Verfahren nach Anspruch 1 oder 2, bei dem die Hochpassfilterung eine Mittelwertbildung des wenigstens einen vierten und fünften Bildinformationswertes (L4,L5) und das Bilden der Differenz zwischen dem dritten Bildinformationswert (L3) und diesem Mittelwert umfasst.

4. Verfahren nach einem der vorangehenden Ansprüche, bei dem die zweite Filterung eine der Hochpassfilterung nachfolgende Verstärkung oder Abschwächung eines durch die Hochpassfilterung erhaltenen Filterwertes umfasst.

5. Verfahren nach einem der vorangehenden Ansprüche, bei dem die zweite Filterung eine der Hochpassfilterung folgende Filterung mit folgenden Übertragungsverhalten umfasst:

$$y = x+a \quad \text{für } x < -a$$

$$y = 0 \quad \text{für } -a \leq x \leq a$$

$$y = x-a \quad \text{für } x > a$$

wobei x das Filtereingangssignal, y das Filterausgangssignal ist und für a > 0 gilt.

6. Verfahren nach einem der vorangehenden Ansprüche, bei dem der dritte Bildinformationswert (L3) dem Bildinformationswert des dritten Bildpunktes (B(x0,y0)), der vierte Bildinformationswert (L4) dem Bildinformationswert des vierten Bildpunktes (B(x0-2,y0))und der fünfte Bildinformationswert (L5) dem Bildinformationswert des fünften Bildpunktes (B(x0+2,y0)) entspricht.

7. Verfahren nach einem der vorangehenden Ansprüche, bei dem der dritte Bildinformationswert (L3) durch eine lineare Mittelung des Bildinformationswertes des dritten Bildpunktes, sowie den Bildinformationswerten weiterer Bildpunkte an der Bildpunktposition des dritten Bildpunktes aus zeitlich vorhergehenden oder nachfolgenden Halbbildern, der vierte Bildinformationswert durch eine lineare Mittelung des Bildinformationswertes des vierten Bildpunktes, sowie den Bildinformationswerten weiterer Bildpunkte an der Bildpunktposition vierten Bildpunktes aus zeitlich vorhergehenden oder nachfolgenden Halbbildern und der fünfte Bildinformationswert durch eine lineare Mittelung des Bildinformationswertes des fünften Bildpunktes, sowie den Bildinformationswerten weiterer Bildpunkte an der Bildpunktposition fünften Bildpunktes aus zeitlich vorhergehenden oder nachfolgenden Halbbildern gebildet ist.

8. Verfahren nach einem der vorangehenden Ansprüche, bei dem der erste oder zweite Bildinformationswert (L1,L2) als Bildinformationswert des interpolierten Bildpunktes ausgegeben wird, wenn der zweite Filterwert größer als die halbe Intervallbreite ist.

9. Verfahren nach einem der Ansprüche 1 bis 7, bei dem ein durch Mischung des ersten und zweiten Bildinformationswertes (L1,L2) gebildeter Wert als Bildinformationswert des interpolierten Bildpunktes erzeugt wird, wenn der zweite Filterwert größer als die halbe Intervallbreite ist.

10. Vorrichtung zur Bildpunktinterpolation, die folgende Merkmale umfasst:

- eine erste Filtereinrichtung (30), die ein Tiefpassfilter umfasst und der der erste und zweite Bildinformationswert (L1,L2) zugeführt sind, und die einen ersten Filtersignalwert (LF1) bereitstellt
- eine zweite Filtereinrichtung(10), die ein Hochpassfilter umfasst und der der dritte, vierte und fünfte Bildinformationswert (L3,L4,L5) zugeführt sind und die einen zweiten Filtersignalwert (LF2) bereitstellt,
- eine Intervallermittlungseinheit (20), der der erste und zweite Bildinformationswert (L1,L2) zugeführt sind und die einen von der Breite eines durch den ersten und zweiten Bildinformationswert (L1,L2) aufgespannten Intervalls abhängigen Intervallwert IN bereitstellt,
- eine Signalverarbeitungseinheit (40, 50, 60), der der erste Filtersignalwert (LF1), der zweite Filtersignalwert (LF2) und der Intervallwert (IN) zugeführt sind und die abhängig von einem Vergleich des Intervallwertes (IN) mit dem zweiten Filtersignalwert (LF2) einen interpolierten Bildinformationswert (Lx) zur Verfügung stellt.

11. Vorrichtung nach Anspruch 10, bei der die Signalverarbeitungseinheit dazu ausgebildet ist, die Summe aus erstem und zweitem Filterwert (LF1,LF2) als Bildinformationswert (Lx) auszugeben, wenn der Betrag des zweiten Filtersignalwertes (LF2) kleiner als der Intervallwert ist.

**12.** Vorrichtung nach Anspruch 10 oder 11, bei der die Signalverarbeitungseinheit dazu ausgebildet ist, als Bildinformationswert einen Wert auszugeben, der innerhalb eines durch den ersten und zweiten Bildinformationswert (L1,L2) aufgespannten Intervalls liegt, wenn der Betrag des zweiten Filtersignalwertes (LF2) größer als der Intervallwert (IN) ist.

**13.** Vorrichtung nach einem der Ansprüche 10 bis 12, bei der der Intervallwert (IN) dem 0,5-fachen der Intervallbreite entspricht.

**Claims**

**1.** A method for interpolating a pixel (A(x0, y0) of an interline of a first field (A) in a sequence of line-interlaced fields (A, B), comprising the following method steps:

    - selecting at least one first pixel (A(x0-1, y0)), to which a first image information value (L1) is assigned, from a first scanning line situated adjacent to the interline and at least one second pixel (A(x0+1, y0)), to which a second image information value (L2) is assigned, from a second scanning line situated adjacent to the interline,
    - providing a third image information value (L3), which is dependent on the image information value at least of one third pixel (B(x0, y0)) from a second field (B) temporally preceding or following the first field, the image position of this second field corresponding to the image position of the pixel to be interpolated (A(x0, y0)), and providing a fourth image information value (L4), which is dependent on the image information value at least of one fourth pixel (B(x0-2,y0)), which in the vertical direction is adjacent to the third pixel (B (x0, y0)), as well as a first image information value (L5), which is dependent on the image information value of at least one fifth pixel B(x0+2, y0), which in the vertical direction is adjacent to the third pixel (B(x0, y0)),
    - generating a first filter value by using a first filtering operation, comprising a low-pass filtering operation, on the at least one first and second image information values (L1, L2),
    - determining the width of an interval predetermined by the first and second image information values (L1, L2),
    - generating a second filter value (LF2) by using a second filtering operation, comprising a high-pass filtering operation, on the third, fourth and fifth image information values (L3, L4, L5),
    - generating an image information value (Lx) of the interpolated pixel (A(x0, y0)) as the sum of the first filter value (LF1) and of the second filter value (LF2) when the absolute value of the second filter value (LF2I is less than half the interval width,
    - generating an image information value (Lx) of the interpolated pixel in such a manner that this image information value lies within the interval when the second filter value is greater than half the interval width.

**2.** A method according to Claim 1, in which the low-pass filtering operation comprises an averaging of the first and second image information values (L1, L2).

**3.** A method according to Claim 1 or 2, in which the high-pass filtering operation comprises an averaging of the at least one fourth and fifth image information values (L4, L5) and the forming of the difference between the third image information value (L3) and this average value.

**4.** A method according to one of the preceding Claims, in which the second filtering operation comprises a gain or attenuation of a filter value obtained by the high-pass filtering operation, said gain or attenuation following the high-pass filtering.

**5.** A method according to one of the preceding Claims, in which the second filtering operation corresponds to a filtering following the high-pass filtering with the following transmission characteristic:

$$y = x+a \quad \text{for } x < -a$$

$$y = 0 \quad \text{for } -a \leq x \leq a$$

$$y = x-a \quad \text{for } x > a$$

wherein x is the filter input signal, y the filter output signal and applies for a > 0.

6.  A method according to one of the preceding Claims, in which the third image information value (L3) corresponds to the image information value of the third pixel (B(x0, y0)), the fourth image information value (L4) corresponds to the image information value of the fourth pixel (B(x0-2, y0)) and the fifth image information value (L5) corresponds to the image information value of the fifth pixel (B(x0+2, y0).

7.  A method according to one of the preceding Claims, in which the third image information value (L3) is formed by linear averaging of the image information value the third pixel, as well as the information values of additional pixels at the pixel position of the third pixel from temporally preceding or following fields, the fourth image information value is formed by linear averaging of the image information value of the fourth pixel, as well as the image information values of additional pixels at the pixel position of the fourth pixel from temporally preceding or following fields, and the fifth image information value is formed by linear averaging of the image information value of the fifth pixel, as well as the image information values of additional pixels at the pixel position of the fifth pixel from temporally preceding or following fields.

8.  A method according to one of the preceding Claims, in which the first or second image information value (L1, L2) is outputted as image information value of the interpolated pixel when the first filter value is greater than half the interval width.

9.  A method according to one of Claims 1 to 7, in which a value formed by mixing the first and second image information values (L1, L2) is generated as the image information value of the interpolated pixel when the second filter value is greater than half the interval width.

10. An apparatus for pixel interpolation, comprising the following features:

    - a first filter device (30) which comprises a low-pass filter and to which the first and second image information values (L1, L2) are supplied, and which provides a first filter signal value,
    - a second filter device (10), which comprises a high-pass filter and to which the third, fourth and fifth image information values (L3, L4, L5) are supplied and which provides a second filter signal value (LF2),
    - an interval determination unit (20), to which the first and second image information values (L1, L2) are supplied and which provides an interval value IN dependent on the width of an interval spanned by the first and second image information values (L1, L2),
    - a signal processing unit (40, 50, 60), to which the first filter signal value (LF1), the second filter signal value (LF2) and the interval value (IN) are supplied and which makes available an interpolated image information value (Lx) dependent on a comparison of the interval value (N) with the second filter signal value (LF2).

11. An apparatus according to Claim 10, in which the signal processing unit is designed to output the sum of the first and second filter values (LF1, LF2) as image information value (Lx) when the absolute value of the second filter signal value (LF2) is less than the interval value.

12. An apparatus according to Claim 10 or 11, in which the signal processing unit is designed to output, as the image information value, a value which lies within an interval spanned by the first and second image information values (L1, L2) when the absolute value of the second filter signal value (LF2) is greater than the interval width (IN).

13. An apparatus according to one of Claims 10 to 12, in which the interval value (IN) corresponds to 0.5 times the interval width.

**Revendications**

1.  Procédé pour l'interpolation d'un pixel [A(x0, y0)] d'un interligne d'un champ (A) dans une succession de champs (A, B) à lignes en interférence, qui comprend les étapes suivantes :

- sélection d'au moins un premier pixel [A(x0-1, y0)], auquel une première valeur d'information d'image (L1) est associée, à partir d'une première ligne d'image située à proximité de l'interligne, et d'au moins un deuxième pixel [A(x0+1, y0)], auquel une deuxième valeur d'information d'image (L2) est associée, à partir d'une deuxième ligne d'image située à proximité de l'interligne,

- préparation d'une troisième valeur d'information d'image (L3), qui dépend de la valeur d'information d'image d'au moins un troisième pixel [B(x0, y0)], à partir d'un deuxième champ (B) précédant ou suivant le premier champ (A), dont la position d'image correspond à la position d'image du pixel à interpoler [A(x0, y0)], et préparation d'une quatrième valeur d'information d'image (L4), qui dépend de la valeur d'information d'image d'au moins un quatrième pixel [B(x0-2, y0)], qui est proche du troisième pixel [B(x0, y0)] en direction verticale, ainsi que d'une cinquième valeur d'information d'image (L5), qui dépend de la valeur d'information d'image d'au moins un cinquième pixel [B(x0+2, y0)], qui est proche du troisième pixel [B(x0, y0)] en direction verticale,

- production d'une première valeur de filtrage par application d'un premier filtrage, qui comprend un filtrage passe-bas, à au moins une première et deuxième valeur d'information d'image (L1, L2),

- détermination de la largeur d'un intervalle prédéterminé par la première et la deuxième valeurs d'information d'image (L1, L2),

- production d'une deuxième valeur de filtrage (LF2) par application d'un deuxième filtrage, qui contient un filtrage passe-haut, à la troisième, la quatrième et la cinquième valeurs d'information d'image (L3, L4, L5),

- production d'une valeur d'information d'image (Lx) du pixel interpolé [A(x0, y0)] par la somme de la première valeur de filtrage (LF1) et de la deuxième valeur de filtrage (LF2), lorsque le montant de la deuxième valeur de filtrage (LF2) est inférieur à la moitié de la largeur de l'intervalle, et

- production d'une valeur d'information d'image (Lx) du pixel interpolé, de sorte que cette valeur d'information d'image se situe à l'intérieur de l'intervalle, lorsque la deuxième valeur de filtrage est supérieure à la moitié de la largeur de l'intervalle.

2. Procédé selon la revendication 1, selon lequel le filtrage passe-bas comprend la formation d'une valeur moyenne de la première et de la deuxième valeurs d'information d'image (L1, L2).

3. Procédé selon la revendication 1 ou 2, selon lequel le filtrage passe-haut comprend la formation d'une valeur moyenne de la au moins une quatrième et cinquième valeurs d'information d'image (L4, L5), et la formation de la différence entre la troisième valeur d'information d'image (L3) et cette valeur moyenne.

4. Procédé selon l'une quelconque des revendications précédentes, selon lequel la deuxième filtrage comprend une amplification ou une atténuation, à la suite du filtrage passe-haut, d'une valeur de filtrage obtenue par le filtrage passe-haut.

5. Procédé selon l'une quelconque des revendications précédentes, selon lequel le deuxième filtrage comprend, après le filtrage passe-haut, un filtrage présentant le comportement de transmission suivant :

$$y = x + a \quad \text{pour } x < -a$$

$$y = 0 \quad \text{pour } -a \leq x \leq a$$

$$y = x - a \quad \text{pour } x > a$$

dans lequel x représente le signal d'entrée du filtre, y le signal de sortie du filtre, et avec a > 0.

6. Procédé selon l'une quelconque des revendications précédentes, selon lequel la troisième valeur d'information d'image (L3) correspond à la valeur d'information d'image du troisième pixel [B(x0, y0)], la quatrième valeur d'information d'image (L4) correspond à la valeur d'information d'image du quatrième pixel [B(x0-2, y0)], et la cinquième valeur d'information d'image (L5) correspond à la valeur d'information d'image du cinquième pixel [B(x0+2, y0)].

7. Procédé selon l'une quelconque des revendications précédentes, selon lequel la troisième valeur d'information d'image (L3) est formée par une moyenne linéaire de la valeur d'information d'image du troisième pixel, ainsi que des valeurs d'information d'image d'autres pixels à la position de pixel du troisième pixel dans des champs temporellement précédents ou suivants, la quatrième valeur d'information d'image (L4) est formée par une moyenne linéaire de la valeur d'information d'image du quatrième pixel, ainsi que des valeurs d'information d'image d'autres pixels à la position de pixel du quatrième pixel dans des champs temporellement précédents ou suivants, la cinquième valeur d'information d'image (L5) est formée par une moyenne linéaire de la valeur d'information d'image du cinquième pixel, ainsi que des valeurs d'information d'image d'autres pixels à la position de pixel du cinquième pixel dans des champs temporellement précédents ou suivants.

**8.** Procédé selon l'une quelconque des revendications précédentes, selon lequel la première ou la deuxième valeur d'information d'image (L1, L2) est émise sous la forme d'une valeur d'information d'image du pixel interpolé, lorsque la deuxième valeur de filtrage est supérieure à la moitié de la largeur de l'intervalle.

**9.** Procédé selon l'une quelconque des revendications 1 à 7, selon lequel une valeur formée par le mélange de la première et de la deuxième valeurs d'information d'image (L1, L2) est produite sous la forme d'une valeur d'information d'image du pixel interpolé, lorsque la deuxième valeur de filtrage est supérieure à la moitié de la largeur de l'intervalle.

**10.** Dispositif pour l'interpolation d'un pixel, qui comprend les caractéristiques suivantes :

    - un premier dispositif de filtrage (30), qui comprend un filtre passe-bas et auquel la première et la deuxième valeurs d'information d'image (L1, L2) sont transmises, et qui produit une première valeur de signal de filtrage (LF1),
    - un deuxième dispositif de filtrage (10), qui comprend un filtre passe-haut et auquel la troisième, la quatrième et la cinquième valeurs d'information d'image (L3, L4, L5) sont transmises et qui produit une deuxième valeur de signal de filtrage (LF2),
    - une unité de détermination d'intervalle (20), à laquelle la première et la deuxième valeurs d'information d'image (L1, L2) sont transmises et qui produit une valeur d'intervalle (IN) dépendant de la largeur d'un intervalle couvert par la première et la deuxième valeurs d'information d'image (L1, L2), et
    - une unité de traitement de signal (40, 50, 60), à laquelle la première valeur de signal de filtrage (LF1), la deuxième valeur de signal de filtrage (LF2) et la valeur de l'intervalle (IN) sont transmises et qui fournit une valeur d'information d'image interpolée en fonction d'une comparaison de la valeur de l'intervalle (IN) avec la deuxième valeur de signal de filtrage (LF2).

**11.** Dispositif selon la revendication 10, dans lequel l'unité de traitement de signal est configurée de façon à produire la somme de la première et de la deuxième valeurs de filtrage (LF1, LF2) sous la forme d'une valeur d'information d'image (Lx), lorsque le montant de la deuxième valeur de signal de filtrage (LF2) est inférieur à la valeur de l'intervalle.

**12.** Dispositif selon la revendication 10 ou 11, dans lequel l'unité de traitement de signal est configurée de façon à produire, comme valeur d'information d'image, une valeur qui se situe à l'intérieur d'un intervalle couvert par la première et la deuxième valeurs d'information d'image (LF1, LF2), lorsque le montant de la deuxième valeur de signal de filtrage (LF2) est supérieur à la valeur de l'intervalle (IN).

**13.** Dispositif selon l'une quelconque des revendications 10 à 12, dans lequel la valeur de l'intervalle (IN) correspond à 0,5 fois la largeur de l'intervalle.

# FIG 1

A

B

# FIG 2

A

B

## FIG 3

## FIG 4

10

L3

m

L4

11

1/2

−

LF2

L5

12     13    15

## FIG 5

10

L3

14

L4

11

1/2

−

L13

LF2

L5

12    13

## FIG 6

20

L1

21

−

1/2

I.I

IN

L2

22    23

FIG 7

FIG 8

EP 1 587 319 B1